Europäisches Patentamt

European Patent Office

Office européen des brevets

(11) Publication number: **0 318 611**
**A1**

# EUROPEAN PATENT APPLICATION

(21) Application number: 87117971.9

(22) Date of filing: 04.12.87

(51) Int. Cl.⁴: **G05D 7/06**

(43) Date of publication of application:
**07.06.89 Bulletin 89/23**

(84) Designated Contracting States:
**AT BE CH DE ES FR GB GR IT LI LU NL SE**

(71) Applicant: **Peschl, Ivan A.S.Z.**
**Kennedylaan 8**
**NL-6029 RE Sterksel(NL)**

(72) Inventor: **Peschl, Ivan A.S.Z.**
**Kennedylaan 8**
**NL-6029 RE Sterksel(NL)**

(74) Representative: **Sperling, Rüdiger, Dipl.-Ing. et al**
**Patentanwälte Dipl.Ing.S. Staeger**
**Dipl.Ing.Dipl.Wirtsch.Ing. R Sperling**
**Müllerstrasse 31**
**D-8000 München 5(DE)**

(54) Method and apparatus for proportioning and/or equalizing a flow of material.

(57) A Method for proportioning the material flow out of a container comprises that the flow is controlled into different levels of rate of flow which flow rate oscilates between a high rate of flow and a low rate of flow in determined periods. An Apparatus for proportioning and equalizing the flow of material out of an output device comprising at least a conveyer, (6) which is provided to receive discontinuouisly or periodically delivered material and having a discharge end cut with a desired angle with respect to the transport direction, i.e. the longitudinal axis of the conveyer, so that the length of the discharge edge contains at least one pulse or wave of the material received from the output device, so that the material is discharged along a broader output edge into a further conveyer which receives more equalized material from the first conveyer.

FIG. 1

# METHOD AND APPARATUS FOR PROPORTIONING AND/OR EQUALIZING A FLOW OF MATERIAL

In advanced silo-systems the discharge of the material is controlled by a loss in weight system, containing a weighing device. Generally, the flowable material has to be discharged from a silo or vessel in a required rate of flow. By this the loss in weight in the silo and the discharge time can be measured. If the loss or discharge in weight per time unit does not correspond with the predetermined or set rate of flow the control signal of the proportioning or weighing system has to be changed.

Common loss in weight systems correct the input of the system such that the rate of flow gets a value as narrow as possible to the theoretical predetermined or set rate of flow. The correction is proportional to the error found during a previous measurement period. In common equipments the time necessary to obtain an average rate of flow equal to the theoretical rate of flow is approximately about one minute, because for each correction one has to wait a certain time before starting a new step of mearurment and a new correction can take place, and a number of correction is necessary before an acceptable deviation can be reached.

During this period of approximately one minute the deviation can be very high. Equalizing this deviation within a period of one minute could be necessary and this requires adequate additonal equipment. If such a situation will occur with small quantities and/or where a very high rate of flow is required, for instance if material is fed to quick chemical processes problems may occur.

Another problem is that for badly and irregularly flowing materials the described prior art method cannot be applied because the reaction of the system on the correctional signal is also irregular and this leads to instability of the proportioning system. The object of the invention is to prevent such errors and make possible a very accurate proportioning of badly flowing material.

The task of the invention is to solve the above mentioned problems.

According to the invention the method for proportioning the material flow from a container is characterized in that the flow is controlled into different levels of rate of flow, the first level having a flow rate being greater than the theoretical ideal flow rate, the second level being smaller than the theoretical ideal flow rate, whereas the high level is maintained during a predetermined time or predetermined loss of weight and whereas the next high level starts at the time corresponding to the theoretic time according to the set rate of flow for loss of weight between the end of the last high level and the end of the previous high level period and whereas the flow period is maintained from the end of a high level period and the begin of the subsequent high level period, or in other words, the flow is divided in two different levels, the first level having a flow rate being greater than the theoretical ideal flow rate, the second level being smaller than the theoretical ideal flow rate, whereas the first level is maintained during a predetermined time period or a predetermined rate of material flow is lost and the second level is installed subsequently to the first level and is maintained until an intermediate point of time corresponding to an intermediate point of the ideal time for the required rate of low is reached and whereas the mentioned sequences are repeated until the required amount of material is achieved.

Opposite to the described known procedures the invention uses two levels of flow rate, both unequal to the required rate of flow. One of the levels is a high level proportioning which has always to be greater -for example 1,1 to 2 times greater- than the theoretical required rate of flow. The other level is a low level proportioning and has always to be smaller - for example 0,5 to 0,9 times smaller - than the theoretical required rate of flow.

This two level proportioning method provides the following steps:

1. Loss in weight with high level until the predescribed weight is lost or a predescribed step time is reached for example - two seconds.

2. Stopping the high level and installing the low level.

3. Running the low level step up to the time which is equal to the time corresponding with the ideal time for the loss in weight related to the required rate of flow.

4. When this ideal time is reached the high level step is initiated again and steps 1 to 3 are repeated.

Thus, opposite to the common methods, a correction of the rate of flow is always from the ideal rate of flow and well to the one of the two levels of rate of flow - the high and the low rate of flow. The result of this twin-level procedure is that the ideal rate of flow never exists but the average rate of flow reaches the ideal rate of flow between 1 and 4 seconds. The length of these periods varies from period to period according to the fluctuations of the rate of flow, but stays short, for example, between 1 and 4 seconds.

The low level can be chosen between ideal rate of flow and zero. In case of zero-low level the fluctuation within one period can be high, but the accuracy from period to period will be very high.

In order to reduce the fluctuation there is disclosed an inventive system for proportioning and equalizing the flow of material out of an output device, comprising at least a conveyer. According to the invention this system is characterized in that the conveyer is provided to receive the discontinuously of periodically delivered material from a device A. The conveyer named B-type conveyer, having a discharge end cut with a desired angle with respect to the longitudinal axis of the conveyer so that the material is discharged along a broader output edge into a second hopper being located beneath the angularly cut output edge for supplying the material to a further conveyer named C-type conveyer which receives more equalized material from said B-type conveyer.

The output of this apparatus can be amended by locating a B-type conveyer beneath the hopper instead of a B-type conveyer. In such a case a second hopper is placed beneath the output end of the second B-type conveyer. The output of the second hopper is more equalized and is nearly constant.

In the following the invention is described in more detail in connection with the drawings, graphs and diagramms.

Brief description of the drawings:

Fig. 1 shows a container which has to be discharged according to a predetermined rate of flow and besides the container a diagramm showing schematically the relation between the different method steps and the container content.

Fig. 2a shows a bloc diagram of the inventive method

Fig. 2b a diagramm showing the approach of the inventive discharge steps to the ideal curve.

Fig. 3a shows graphs of the flow of dry sand

Fig. 3b shows graphs of the flow of dry sand

Fig. 4 shows schematically the device comprising stations A to C for equalizing the flow rate and

Fig. 5 presents three diagramms showing different flow conditions.

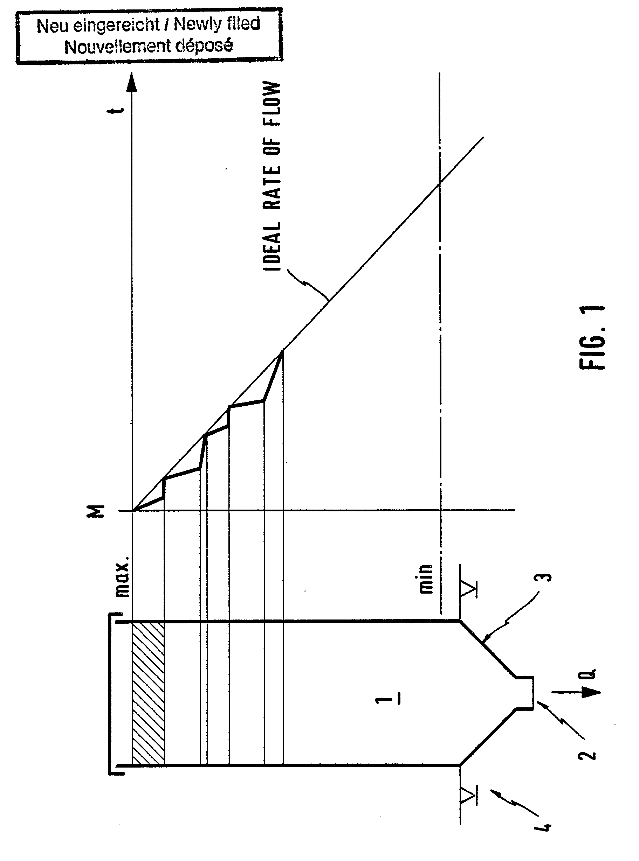

In Fig. 1 a container 1 for instance a silo has a content of flowable material which has to be discharged through the discharge opening 2 at a bottom hopper 3 of the silo.

Max. denotes the maximum filling and min. denotes the minimum filling which is the limit to which the silo should be discharged. Reference number 4 denotes a weight system which enables to measure the loss of weight in the silo.

On the right hand side of fig. 1 there is shown a diagramm presenting the ideal rate of flow of the material M over the time T and there is inserted schematically the approach to this ideal rate of flow which is achieved by the inventive method.

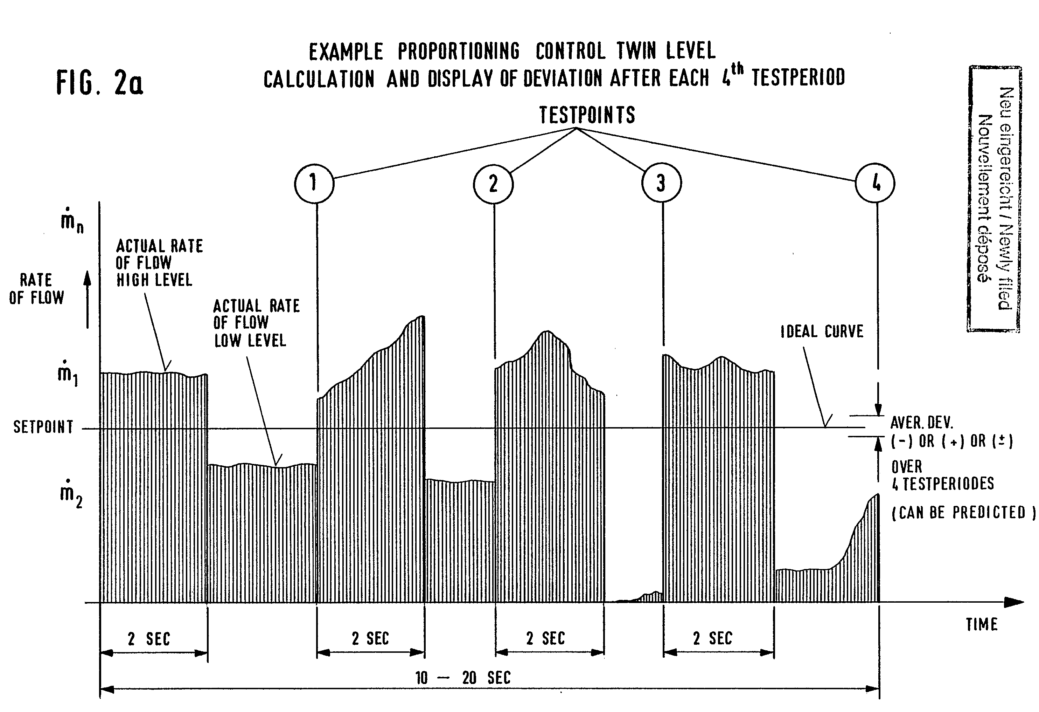

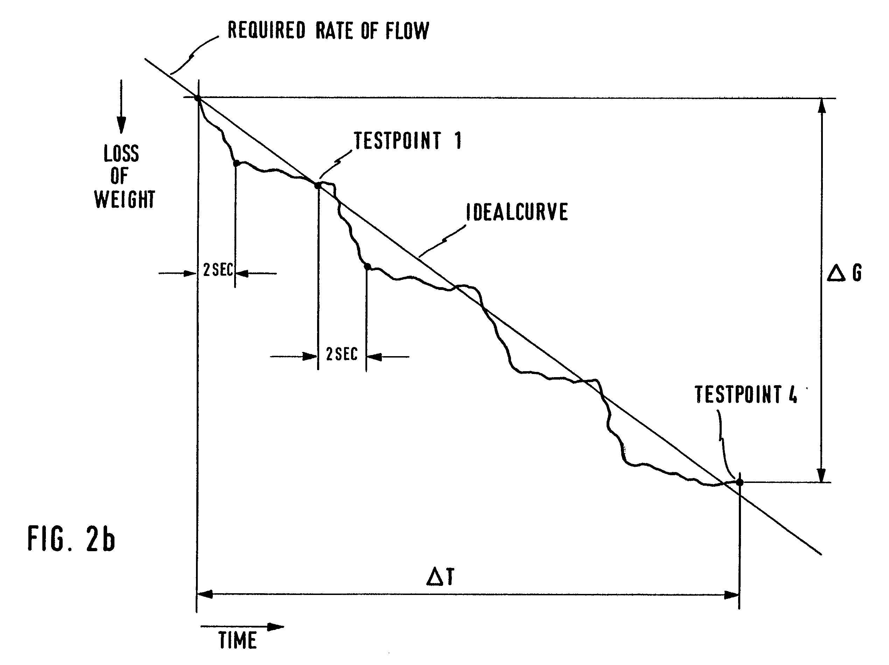

The invention uses two different rate of flow levels which both are unequal to the ideal required rate of flow. In fig.2a there is an example for proportioning control of the inventive twin level method. It is described by a block diagramm, the X-axis of the coordinate system is the time and the Y-axis is the rate of flow. The ideal rate of flow is constant and this ideal rate of flow is predetermined by the required amount of material. The discharge procedure starts for instance with the actual rate of flow on a high level discharging $\bullet m_1$, which is greater than the ideal rate of flow. This discharging step leads to a loss in weight and this is controlled and stopped after a predetermined time, for instance two seconds. Subsequent to the high level discharge step the low level discharging is conducted until the respective curve shown in fig.2b intersects in test point 1 of the ideal curve. Then a further high level proportioning or discharge step is conducted during a time period of two second and after this the second low level step is initiated. These sequences are repeated until the required amount of loss of material is achieved.

In Fig.2b the actual curve of the discharge is not shown in a straight line but with a corrugated line. This is a correct picture of what occurs actually since the content in such a container may have an inhomogeneous flowability. One can see that the point four (4) is just a little bit above the ideal curve and that this deviation is not the sum of the deviations of the test points 1 to 3. From this diagram it is clear that the ideal rate of flow in reality does not exist, since also the ideal material with the ideal flow conditions and the ideal storage does not exist in reality. But with the inventive method it is possible to approach the ideal rate of flow in economical short periods of few seconds. The length of these periods varies as already mentiond above from period to period according to the fluctuations of the real rate of flow shown by the corrugated discharge curves.

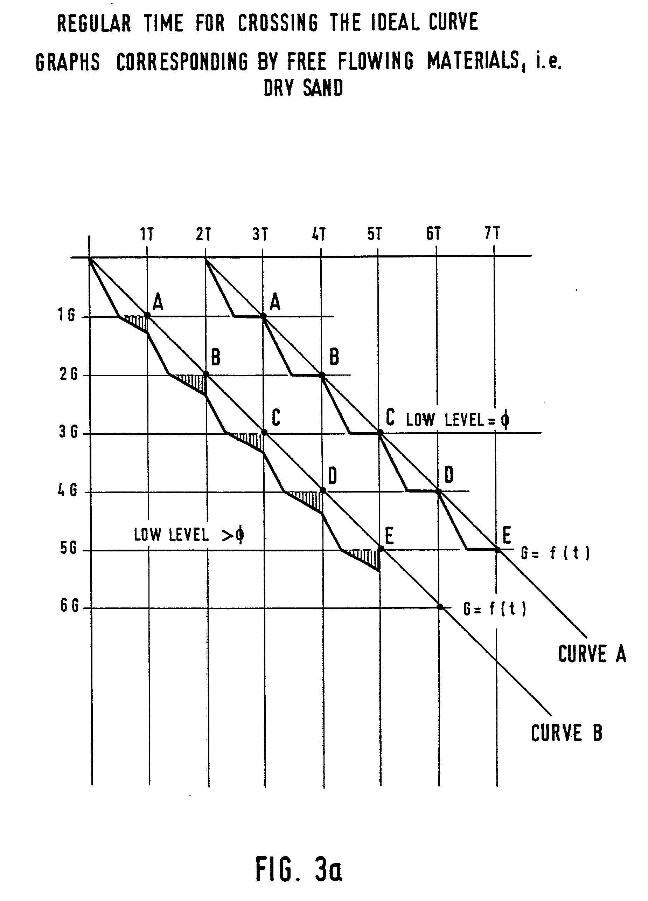

In Fig. 3a there are two further examples for a special proportioning process. Curve A shows a special procedure called high/zero level proportioning. In this procedure the discharge starts as usual on a high level and after reaching the loss of weight G the flow stops completely. The low level in this special case is a zero level so that when the time $N^*T$ corresponding to $N^*G$ on the ideal curve is reached that this charge on a high level starts again. The points A,B,C etc. represent the points on the ideal curve.Thus, the deviation equals zero. For the most of the materials the time sequence of zero is between one to four seconds.

The graph of curve B shows a high/low level proportioning during which method the flow changes after the high level discharge has reached the height N* to low level. In the graph the high level discharge is about 1,5 of the ideal flow, whereas the low level is about 0,5 of the ideal flow. The low level discharge runs until the ideal time N*t is reached and a procedure switches to the high level step again.

Both, curve A and curve B procedures are carried out with regular time for both discharge rates. One can use such fixed discharge rates if the silo content is a material having good flowing qualities,for instance dry sand.

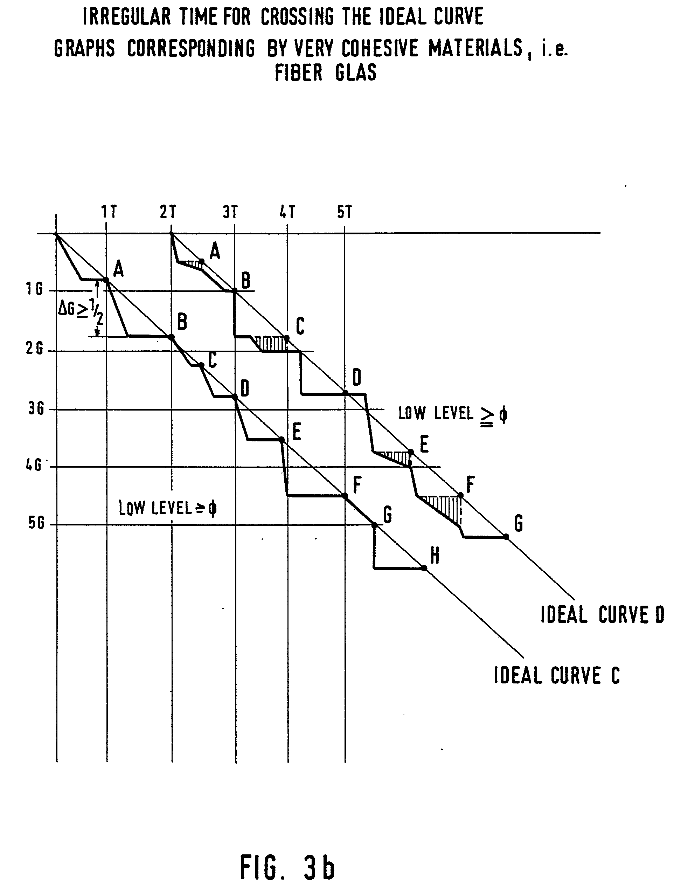

The graphs of fig.3b however, are directed to material for instance fiber glass which has no constant flow conditions and therefore the discharge has to be carried out with different time periods between the intersection point of the real rate of flow and the ideal rate of flow.

Curve D in Fig.3b is directed to the case where the low level proportioning or discharging is equal zero. Since the material has an irregular flow rate the time periods varies in such a way that very irregular curve of flow is achieved. This proportioning system is applied; as already stated, to badly flowing material like cohesive powder or fibre materials. By these materials lumps can be discharged in which case the proportioning signal has no relation to the actual flow rate of the very moment. Therefore only a minimum discharge of material is required, for instance 0,5·G. Reaching a discharge of G/Z after the last intersection of the ideal curve the proportioning stops completely until the intersection of ideal curve is reached, best shown between the points E and F of curve C.

For this case the procedure neither the time intervals nor the weight values between two time intervals which represent the cross section of the ideal curve are constant.

Curve D in the diagram above curve C is representative also for badly flowing material but the low level discharging is different from zero. The periods between the cross section of ideal curve and the real flow rate curve are irregular like in curve D.

Because of the loss of material during the low level and more or less unpredictable losses in weight during the high level the avarage period between two intersections of ideal curves are lower than at curve B but one can expect that the waves at curve D would be smaller as those at curve C, where the material flow stops during the low level period which therefore is a zero level.

As could be shown in the graphs with the curves C and D badly flowing material can cause some irregulary peaks which however can be equalized within a time period of a few seconds. Regarding curve D in the periods between the points A and B respectively the intensity of discharge drive is supposed to be the same, but in A the real rate of flow is much greater than in B.

In the period C there is in some moments of low level proportioning no flow at all. In the period D there is no discharge during the whole low level period, whereas in period E the high level starts to discharge later than supposed.

However, in all this periods the ideal curve will be intersected in periods of a few seconds so that the real rate of flow does not deviate very much from the theoretical rate of flow.

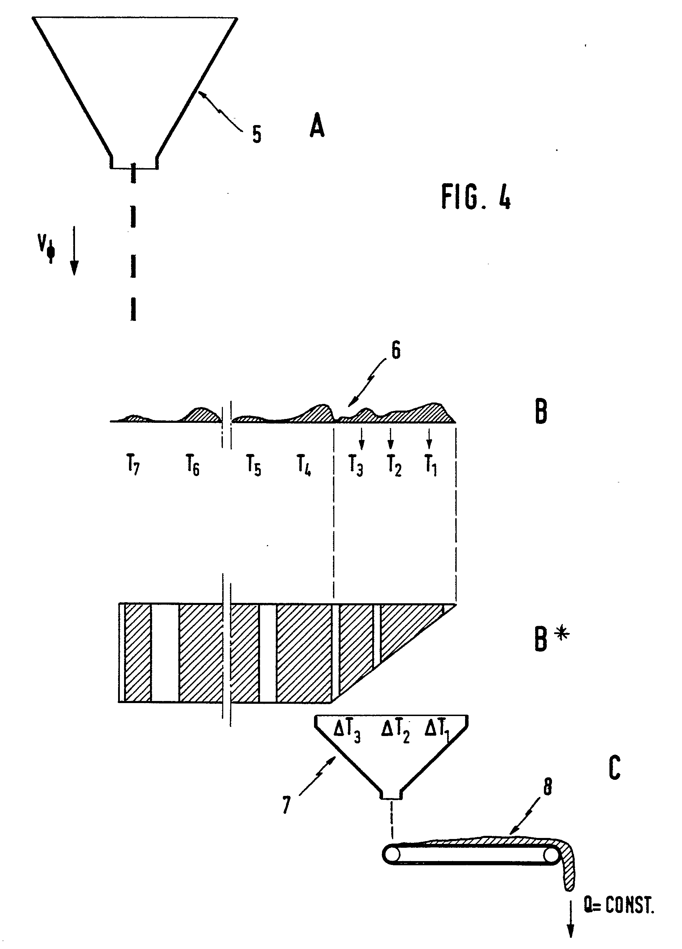

Fig. 4 shows a system for equalizing an inconstant or irregular flow of material which system has at least three stations A,B und C.

In station A, 5 denotes a hopper or any other output device from which material is delivered to a station B which is a conveyer 6. The rate of flow between station A and station B is inconstant and some times irregular as shown by the different amount of material laying on the conveyer 6. In this example the conveyer 6 is a vibration conveyer. According to the invention the edge of the output end which edge discharges the material has a discharge end cut with a desired angle with respect to the longitudinal axis of the conveyer so that the material is discharged along a broader output edge along which a great number of waves are spread generally in line, the average of this waves varies less than the material flow on input. To explain this procedure in Fig.4 beneath the material spots there are denotation marks $T_1$ to $T_7$. $T_1$ means that the material at this location was fed to the conveyer at a time $T_1$, subsequent to the material of $T_2$ was delivered after a certain time period later and so on.

Due to the inclined discharge edge parts of the material of $T_1$, $T_2$ and $T_3$ are discharged together into a hopper 7.

B* shows the view of the fibrating conveyer from above. For better understanding the material $T_1$ is shown as being placed on the conveyer 6 in stripes, so that the physical background of the inventive idea can be better understood.When the strips reach the output edge of the conveyer 6 they are not discharged at once but the material spread transversely the width falls down continuously and partially.

From the hopper 7 the equalized material is fed to a further conveyer 8 which can be also a conveyer as described in station B but if the proportioning and equalization of the material is sufficient, this conveyer can be a conventional conveyer with an output Q = constant.

It is to be noted, that it depends on the material to be equalized whether or not a second station B should be used in addition to the first station B.

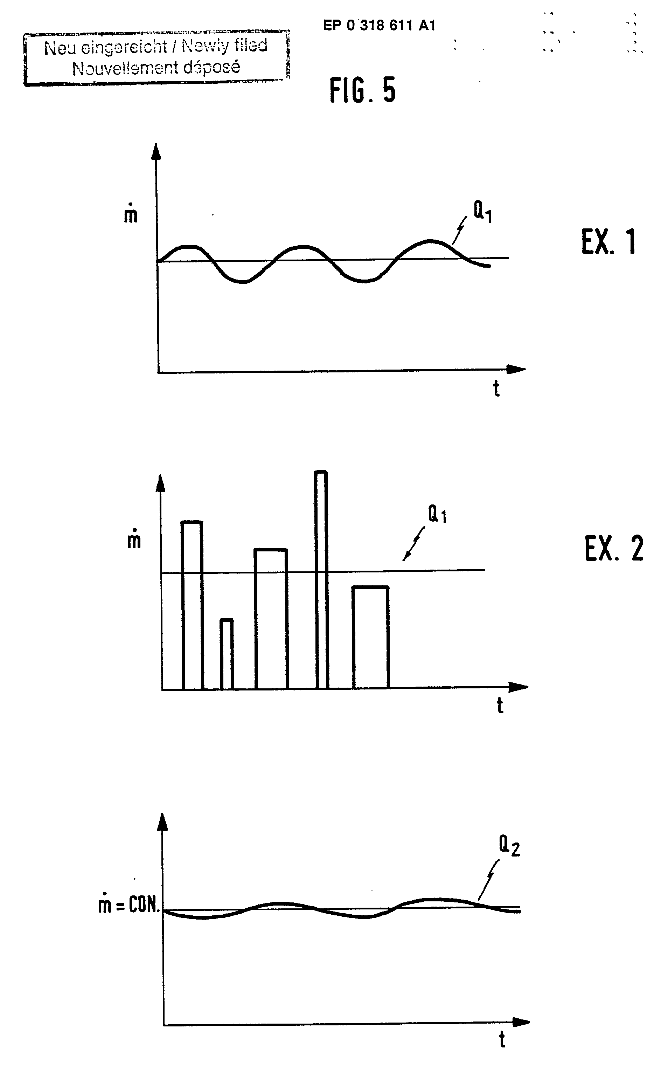

Fig. 5 presents three diagramms showing different flow conditions in different stations and of different material. The first diagramm which is directed to an example 1 shows a flow condition which is similar to a sinus-wave, that means there are regular periodical changes in the output flow of the hopper 5.

The diagramm of example 2 shows an unsteady flow rate in which sometimes material is fed and this feeding periods alternate with periods without any flow, on the other hand the amount of the fed material also is unequal. The third diagramm shows the curve which is achieved when a material has run through the equalizer system and is supplied from the conveyer 8.

## Claims

1. Method for proportioning the material flow out of a container, **characterized** in that the flow is controlled into different levels of rate of flow, the first level having a flow rate being greater than the theoretical ideal flow rate, the second level being smaller than the theoretical ideal flow rate, whereas the high level is maintained during a predetermined time or predetermined loss of weight and whereas the next high level starts at the time corresponding to the theoretic time according to the set rate of flow for loss of weight between the end of the last high level and the end of the previous high level period and whereas the flow period is maintained from the end of a high level period and the begin of the subsequent high level period.

2. Apparatus for proportioning and equalizing the flow of material out of an output device, named A-type device, comprising at least a conveyer, **characterized** in that the conveyer is provided to receive the discontinuously or periodically delivered material, this conveyer named B-type conveyer, having a discharge end cut with a disired angle with respect to the transport direction, i.e. the longitudinal axis of the conveyer, so that the lenghth of the discharge edge contains at least one pulse or wave of the material recieved from the A-type device,so that the material is discharged along a broader output edge into a further conveyer named C-type conveyer which receives more equalized material from said B-type conveyer.

3. Apparatus according to claim, 2 **characterized** in that the B-type conveyer feeds directly or via a hopper, the next B-type conveyer until the fluctuation reaches the required level.

FIG. 1

EP 0 318 611 A1

FIG. 2a

EXAMPLE PROPORTIONING CONTROL TWIN LEVEL
CALCULATION AND DISPLAY OF DEVIATION AFTER EACH 4th TESTPERIOD

TESTPOINTS

RATE OF FLOW

$\dot{m}_n$

ACTUAL RATE OF FLOW HIGH LEVEL

ACTUAL RATE OF FLOW LOW LEVEL

$\dot{m}_1$

SETPOINT

$\dot{m}_2$

IDEAL CURVE

AVER. DEV.
(−) OR (+) OR (±)

OVER
4 TESTPERIODES

(CAN BE PREDICTED)

2 SEC    2 SEC    2 SEC    2 SEC

10 — 20 SEC

TIME

EP 0 318 611 A1

FIG. 2b

EP 0 318 611 A1

## REGULAR TIME FOR CROSSING THE IDEAL CURVE
## GRAPHS CORRESPONDING BY FREE FLOWING MATERIALS, i.e. DRY SAND

FIG. 3a

## IRREGULAR TIME FOR CROSSING THE IDEAL CURVE
## GRAPHS CORRESPONDING BY VERY COHESIVE MATERIALS, i.e.
## FIBER GLAS

FIG. 3b

A

5

FIG. 4

$V_\phi$ ↓

6

B

$T_7$  $T_6$  $T_5$  $T_4$  $T_3$  $T_2$  $T_1$

B *

$\Delta T_3$  $\Delta T_2$  $\Delta T_1$

7

C

8

Q= CONST.

# FIG. 5

EX. 1

EX. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 631 961 (M.L. STRYDOM)<br>* Abstract; figure *<br>--- | 2 | G 05 D 7/06 |
| A | US-A-3 834 473 (GIRARD)<br>* Abstract; column 6, line 6 - column 8, line 59; figures 1,5 *<br>----- | 1 | |

| | TECHNICAL FIELDS SEARCHED (Int. Cl.4) |
|---|---|
| | G 05 D<br>G 01 F |

The present search report has been drawn up for all claims

| Place of search | Date of completion of the search | Examiner |
|---|---|---|
| THE HAGUE | 20-06-1988 | GOETZ P.A. |

EPO FORM 1503 03.82 (P0401)